(19) Europäisches Patentamt
European Patent Office
Office européen des brevets

(11) Veröffentlichungsnummer : **0 165 483**
**B1**

(12) **EUROPÄISCHE PATENTSCHRIFT**

(45) Veröffentlichungstag der Patentschrift : **30.11.88**

(21) Anmeldenummer : **85106114.3**

(22) Anmeldetag : **18.05.85**

(51) Int. Cl.⁴ : **C 09 B 51/00**, D 06 P 3/32

# (54) Verfahren zur Herstellung von sauren Nitrofarbstoffen.

(30) Priorität : **24.05.84 DE 3419394**

(43) Veröffentlichungstag der Anmeldung : **27.12.85 Patentblatt 85/52**

(45) Bekanntmachung des Hinweises auf die Patenterteilung : **30.11.88 Patentblatt 88/48**

(84) Benannte Vertragsstaaten : **CH DE FR GB IT LI**

(56) Entgegenhaltungen :
**EP-A- 0 126 378**
**DE-A- 3 330 948**
**GB-A- 1 468 478**

(73) Patentinhaber : **HOECHST AKTIENGESELLSCHAFT**
**Postfach 80 03 20**
**D-6230 Frankfurt am Main 80 (DE)**

(72) Erfinder : **Hertel, Hasso, Dr.**
**Brunnenweg 10**
**D-6052 Mühlheim/Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 165 483 B1**

**Beschreibung**

In der Britischen Patentschrift Nr. 1 468 478 sind Farbstoffe beschrieben, die durch Behandlung von Amino-nitrodiphenyl-amin-sulfonsäuren mit Braunstein bei einem pH-Wert von über 6 und erhöhter Temperatur erhalten werden. Sie dienen zum Färben von Leder.

Für das färberische Verhalten von Leder ist nun die Art seiner Gerbung von ausschlaggebender Bedeutung. Die wichtigste Gerbung ist heute die Gerbung mit Chromsalzen; so werden nach Literaturangaben (bspw. Ullmanns Encyklopädie der technischen Chemie, 4. Auflage, Band 16, S. 120) etwa 80 % des insgesamt hergestellten Leders chromgegerbt. Die obengenannten bekannten Farbstoffe geben zwar auf zwischengetrocknetem Chromspaltleder oder auch auf zwischengetrocknetem nachchromiertem, vegetabilisch gegerbtem Leder Färbungen in vollen Tönen, dagegen können auf frischem Chromleder, wie zum Beispiel Boxcalf, nur sehr helle Färbungen erhalten werden. Diese in der Praxis sehr wichtige Lederart läßt sich demzufolge mit den erwähnten bekannten Farbstoffen nicht zufriedenstellend färben.

Zur Verbesserung solcher färberischer Nachteile wurden nun saure Nitrofarbstoffe gefunden, die durch Behandlung von Aminonitrodiphenylaminsulfonsäuren mit Wasserstoffperoxid in wäßrigem Medium bein einem pH-Wert von größer als 3 hergestellt werden können.

Mit auf diese Weise erhältlichen Farbstoffen läßt sich frisches Chromnarbenleder in vollen Tönen färben.

Gegenüber den bekannten Verfahren der GB-PS 1 468 478 ergibt sich zusätzlich der technische Vorteil, daß wegen der Wasserlöslichkeit des Oxidationsmittels und der Reaktionsprodukte auf eine Klärfiltration vor der Farbstoffisolierung verzichtet werden kann.

Die Oxidation kann auch in Gegenwart von Schwermetallionen vorgenommen werden, wodurch der Farbton des entstehenden Reaktionsprodukts beeinflußt werden kann. Besonders geeignet sind Eisen-, Kobalt-, Chrom-, Kupfer-, Nickel-, Zink- und Manganionen. Verbindungen, die in wäßrigem Medium Schwermetallionen liefern, sind insbesondere deren wasserlöslichen Salze, wie bspw. deren Sulfate, Chloride, Nitrate und Acetate, insbesondere Eisen(II)- und Eisen(III)-chlorid, Eisen(II)-sulfat, Eisen(III)-sulfat, Kupfersulfat, Nickelsulfat, Kobalt(II)-chlorid, Kobalt(III)-sulfat, Kobalt(II)-acetat, Mangan(II)-chlorid und Mangan(II)-sulfat, aber auch weitgehend deren wasserschwerlöslichen Salze, wie Carbonate, Phosphate, Oxide oder Hydroxide, wie z. B. Zinkcarbonat, Mangan(II)-phosphat, Zinkoxid oder Eisen(III)-hydroxid (so können die wasserschwerlöslichen Schwermetallsalze während des Verfahrens aus den wasserlöslichen Metallsalzen entstehen).

Die vorliegende Erfindung betrifft somit ein verbessertes Verfahren zur Herstellung von sauren Nitrofarbstoffen durch Behandlung von Amino-nitrodiphenylamin-sulfonsäuren mit einem Oxidationsmittel in wäßrigem Medium, das dadurch gekennzeichnet ist, daß man die Umsetzung mit Wasserstoffperoxid als Oxidationsmittel bei einem pH-Wert von größer als 3, vorzugsweise bei einem pH-Wert zwischen 4 und 12, insbesondere zwischen 6 und 9, und einer Temperatur zwischen 0 und 100 °C, vorzugsweise zwischen 10 und 60 °C, und gegebenenfalls in Gegenwart von Schwermetallionen durchführt, — und ebenso betrifft sie die so erhältlichen sauren Nitrofarbstoffe.

Die Umsetzung kann in Lösung oder in Suspension mit Wasser als Reaktionsmedium erfolgen.

Das erfindungsgemäße Verfahren kann durch Oxidation einer oder mehrerer Amino-nitrodiphenylamin-sulfonsäuren durchgeführt werden.

Das Wasserstoffperoxid wird als wäßrige Lösung eingesetzt. Vorzugsweise werden die handelsüblichen Konzentrationen verwendet, wie insbesondere 30-35 %iges wäßriges Wasserstoffperoxid. Wasserstoffperoxid wird bevorzugt in einer Menge von 0,2 bis 3,5 Mol, insbesondere bevorzugt von 0,5 bis 2 Mol pro Mol Amino-nitrodiphenylaminsulfonsäure eingesetzt.

Nach beendeter Reaktion wird das gebildete Farbstoff gemisch durch Sprühtrocknung oder durch Aussalzen und Absaugen isoliert, wobei im letztgenannten Fall die erforderliche Trocknung beispielsweise in einem Warmluftstrom erfolgen kann. Die erhaltenen Farbstoffpulver kann man durch Vermischen mit wasserlöslichen, nicht färbenden Stoffen, z. B. Natriumchlorid, Natriumsulfat, Natriumcarbonat, Natriumhydrogencarbonat oder auch Sorbit, auf eine bestimmte Stärke stellen.

Das erfindungsgemäße Verfahren wird bevorzugt in der Weise durchgeführt, daß man die Amino-nitrodiphenylamin-sulfonsäure(n) in Wasser verrührt und erforderlichenfalls den gewünschten pH-Wert mittels einem alkalisch wirkenden Mittel, wie einem Alkali- oder Erdalkalimetallsalz oder -hydroxid, einstellt. Solche alkalisch wirkenden Mittel sind beispielsweise Alkalicarbonate, Alkalibicarbonate, Alkaliphosphate und Alkalihydroxide, desweiteren auch Calciumcarbonat und Calciumoxid (das in wäßriger Lösung in Calciumhydroxid übergeht) sowie Magnesiumoxid. Zu dieser wäßrigen Lösung und/oder Suspension der Amino-nitrodiphenylamin-sulfonsäure bzw. dessen Alkali- oder Erdalkalimetallsalzes kann man, sofern gewünscht, insbesondere jedoch bevorzugt, ein wasserlösliches Schwermetallsalz zugeben. Zur Überführung der Amino-nitrodiphenylamin-sulfonsäure in die erfindungsgemäßen sauren Nitrofarbstoffe gibt man sodann langsam eine wäßrige Lösung von Wasserstoffperoxid, bevorzugt 25-50 %iges Wasserstoffperoxid, unter gutem Rühren hinzu. Die Oxidationsreaktion ist dabei mit einer geringen Temperaturerhöhung verbunden. Man rührt den Ansatz noch einige Stunden nach und isoliert sodann die sauren Nitrofarbstoffe bevorzugt durch Sprühtrocknung.

Die als Ausgangsverbindungen dienenden Amino-nitrodiphenylamin-sulfonsäuren können in den beiden Benzolkernen weitere Substituenten, die für solche Verbindungen zur Herstellung von sauren Nitrofarbstoffen üblich sind, enthalten ; solche Substituenten sind vorzugsweise Halogenatome, wie Chlor- und Bromatome, Alkylgruppen, insbesondere von 1 bis 4 C-Atomen, Alkoxygruppen, insbesondere von 1 bis 4 C-Atomen, und Carboxygruppen. Das erfindungsgemäße Verfahren verwendet bevorzugt als solche Ausgangsverbindungen Amino-nitrodiphenylamin-sulfonsäuren entsprechend der allgemeinen Formel (1)

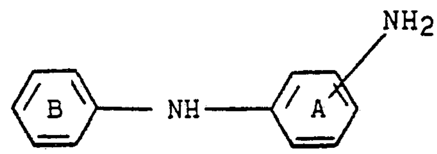

(1)

in welcher die an den Benzolkern A gebundene primäre Aminogruppe in meta- oder para-Stellung zur sekundären Aminogruppe steht, der Benzolkern B durch eine oder zwei Nitrogruppen und eine Sulfogruppe substituiert ist, die in ortho- und para-Stellung zur sekundären Aminogruppe an den Kern B gebunden sind, und in welcher die Benzolkerne A und B noch jeweils zusätzlich durch einen oder zwei, vorzugsweise einen Substituenten substituiert sein können, die aus der Gruppe Halogen, wie Brom und insbesondere Chlor, Alkyl von 1 bis 4 C-Atomen, wie Ethyl und Methyl, Alkoxy von 1 bis 4 C-Atomen, wie Ethoxy und Methoxy, und Carboxy ausgewählt sind. Die primäre Aminogruppe im Benzolkern A steht vorzugsweise in para-Stellung des Diphenylamins.

Amino-nitrodiphenylamin-sulfonsäuren sind beispielsweise 4-Amino-4'-nitrodiphenylamin-2'-sulfonsäure, 4-Amino-2'-nitro-diphenylamin-4'-sulfonsäure, 4-Amino-2',4'-dinitrodiphenylamin-6'-sulfonsäure, 4-Amino-2',6'-dinitro-diphenylamin-4'-sulfonsäure, 3-Amino-4'-nitro-diphenylamin-2'-sulfonsäure sowie die in einem der beiden Benzolkernen durch ein Halogenatom, wie Chlor- oder Bromatom, eine Alkylgruppe von vorzugsweise 1 bis 4 C-Atomen, eine Alkoxygruppe von vorzugsweise 1 bis 4 C-Atomen oder eine Carboxygruppe substituierten Verbindungen.

Die erfindungsgemäß erhältlichen sauren Nitrofarbstoffe sind im warmen und kalten Wasser sehr gut löslich. Sie eignen sich zum Färben von Leder, insbesondere zum Färben von Chromleder der verschiedensten Herstellungsart, wie zwischengetrocknetem Chromleder, beispielsweise Chromspaltleder, frischem Chromleder, bspw. Boxcalf- oder Rindboxleder, oder gemisch chrom-vegetabil gegerbtem Leder, wie nachchromiertem vegetabil vorgegerbtem Schafleder. Auch zum Färben von aluminium- oder zirkongegerbtem Leder sind sie gut geeignet. Die erfindungsgemäß erhältlichen Farbstoffe färben die Leder gut ein. Ihre Farbstärke ist im Vergleich zu bekannten Nitrofarbstoffen hoch und ihre Echtheiten, wie bspw. Lichtechtheit, Lickerechtheit, Wasserechtheit und Lösungsmittelechtheit, sind gut. Die Verwendung der Farbstoffe zum Färben von Leder bzw. die Herstellung der Färbungen mit Hilfe dieser Farbstoffe erfolgt in üblicher Weise. Zur Herstellung der Färbungen eignet sich besonders das Färben im Faß. Hierbei wird das Leder nach dem Entsäuren und Aufwalken in einer Flotte bewegt, die den Farbstoff und gegebenenfalls eine geringe Menge einer schwachen Base, wie Ammoniak, und/oder ein anionisches Tensid enthält. Anschließend wird zur Weichstellung des Leders in üblicher Weise ein Licker zugegeben und nach dessen Einarbeitung das Bad schwach sauer gestellt, wozu üblicherweise Ameisensäure verwendet wird. Es lassen sich jedoch auch Bürst- und Spritzfärbungen herstellen, wofür beispielsweise eine Färbeflotte verwendet wird, die neben dem Farbstoff noch Ammoniak, wie etwa 25 %igen wäßrigen Ammoniak, ein anionaktives Tensid sowie etwa 10 % Ethanol enthält. Da die sprühgetrockneten Farbstoffe, abgesehen von evtl. in geringer Menge vorhandenem Schwermetallsalz, frei von anorganischen Salzen sind, können sie sehr gut in Bürst- oder Spritzflotten verwendet werden, die neben organischen Lösungsmitteln wenig oder kein Wasser enthalten.

Die nachfolgenden Beispiele dienen zur Erläuterung der Erfindung. Die Teile sind Gewichtsteile und die Prozentangaben beziehen sich auf Gewichtsprozente, sofern nicht anders vermerkt.

## Beispiel 1

30,9 Teile 4'-Nitro-4-amino-diphenylamin-2'-sulfonsäure werden mit 280 Teilen Wasser von 20 bis 25 °C verrührt, und 1 Teil Kobaltsulfat-heptahydrat wird zugegeben. Mittels etwa 12,5 Teilen einer 32 %igen wäßrigen Natronlauge wird die Amino-nitrodiphenylamin-sulfonsäure in ihr lösliches Natriumsalz übergeführt ; der pH-Wert der Lösung beträgt nun etwa 7. Nun gibt man langsam innerhalb von etwa 30 Minuten 10 Teile einer wäßrigen 35 %igen Wasserstoffperoxid-Lösung unter Rühren hinzu. Bei dieser Oxidationsreaktion steigt die Temperatur um einige Grade an. Der pH-Wert der Reaktionslösung verändert sich nur geringfügig.

Es wird noch etwa 15 Stunden nachgerührt und das erhaltene Reaktionsprodukt sodann durch Sprühtrocknung isoliert.

Man erhält ein Farbstoffpulver, das Leder — auch frisches Chromnarbenleder — in einem vollen Braunton färbt.

## Beispiel 2

Zur erfindungsgemäßen Herstellung saurer Nitrofarbstoffe verfährt man gemäß der Verfahrensweise des Beispieles 1, verwendet jedoch anstelle des Kobaltsulfats 0,6 Teile Eisen(III)-chlorid.

Nach Sprühtrocknung erhält man ein Farbstoffpulver, das ähnlich gute färberische Eigenschaften wie der nach Beispiel 1 erhältliche Farbstoff besitzt ; die mit dem Farbstoff des Beispieles 2 erhältlichen Lederfärbungen zeigen jedoch einen braunoliven Farbton.

## Beispiel 3

Zur erfindungsgemäßen Herstellung von sauren Nitrofarbstoffen verfährt man gemäß der Verfahrensweise des Beispieles 1, setzt jedoch anstelle von Kobaltsulfat 1 Teil Mangansulfat-pentahydrat ein.

Nach Sprühtrocknung erhält man ein Farbstoffpulver, das ähnlich gute färberische Eigenschaften wie der nach Beispiel 1 erhältliche Farbstoff besitzt ; die mit dem Farbstoff des Beispieles 3 erhältlichen Lederfärbungen zeigen jedoch einen rötlichbraunen Farbton.

## Beispiel 4

Zur erfindungsgemäßen Herstellung von sauren Nitrofarbstoffen verfährt man gemäß der Verfahrensweise des Beispieles 1, setzt aber weder Kobaltsulfat noch irgendein anderes Schwermetallsalz zu.

Nach Sprühtrocknung erhält man ein Farbstoffpulver, das ähnlich gute färberische Eigenschaften wie der nach Beispiel 1 erhältliche Farbstoff besitzt ; die mit dem Farbstoff des Beispieles 4 erhältlichen Lederfärbungen zeigen jedoch einen gelbbraunen Farbton.

## Beispiel 5

30,9 Teile 4'-Nitro-4-amino-diphenylamin-2'-sulfonsäure und 1,0 Teile Kupfersulfat-pentahydrat werden mit 280 Teilen Wasser von 25 °C verrührt. Mit 12,0 Teilen einer 32 %igen wäßrigen Natronlauge führt man die Sulfonsäureverbindung weitgehend in deren Natriumsalz über. Der pH-Wert der Lösung liegt nunmehr bei etwa 6,5. Man gibt nunmehr innerhalb von etwa 30 Minuten langsam und stetig 22 Teile einer wäßrigen 35 %igen Wasserstoffperoxidlösung hinzu ; bei der Oxidationsreaktion steigt die Reaktionstemperatur auf etwa 30 °C an ; der pH-Wert ändert sich nur wenig. Der Reaktionsansatz wird noch etwa 15 Stunden lang nachgerührt und anschließend sprühgetrocknet.

Man erhält ein Farbstoffpulver, das Leder — auf frisches Chromnarbenleder — in einem vollen gelbstichigen Braunton färbt.

## Beispiel 6

Zur erfindungsgemäßen Herstellung eines sauren Nitrofarbstoffes verfährt man gemäß der Verfahrensweise des Beispieles 5, setzt jedoch anstelle von Kupfersulfat 0,5 Teile Nickelsulfat-pentahydrat ein.

Nach der Sprühtrocknung erhält man ein Farbstoffpulver, das ähnlich gute färberische Eigenschaften aufweist wie die nach Beispiel 5 erhaltenen Farbstoffe ; es färbt jedoch Leder in oliv-braunen Tönen.

## Beispiel 7

Zur erfindungsgemäßen Herstellung eines sauren Nitrofarbstoffes verfährt man gemäß der Verfahrensweise des Beispieles 5, setzt jedoch anstelle von Kupfersulfat 0,5 Teile eines basischen Chromacetats ein.

Nach der Sprühtrocknung erhält man ein Farbstoffpulver, das ähnlich gute färberischen Eigenschaften aufweist wie die nach Beispiel 5 erhaltenen Farbstoffe ; es färbt jedoch Leder in neutral-braunen Tönen.

## Beispiel 8

Zur erfindungsgemäßen Herstellung eines sauren Nitrofarbstoffes verfährt man gemäß der Verfahrensweise des Beispieles 5, setzt jedoch anstelle von Kupfersulfat 0,5 Teile wasserfreies Zinksulfat ein.

Nach der Sprühtrocknung erhält man ein Farbstoffpulver, das ähnlich gute färberische Eigenschaften aufweist wie die nach Beispiel 5 erhaltenen Farbstoffe ; es färbt jedoch Leder in gelbstichig olivbraunen Tönen.

## Beispiel 9

33,9 Teile 4'-Nitro-4-amino-3-methoxy-diphenylamin-2'-sulfonsäure und 0,5 Teile Nickelsulfat-pentahydrat werden mit 250 Teilen Wasser verrührt und 3,0 Teile Natriumhydroxid, in wenig Wasser gelöst, wird hinzugegeben. Es stellt sich ein pH-Wert von etwa 6 ein. Sodann gibt man innerhalb von 15 Minuten

gleichmäßig unter Rühren 20 Teile einer 35 %igen wäßrigen Wasserstoffperoxid-Lösung hinzu. Die anfängliche Reaktionstemperatur von 25 °C steigt dabei auf etwa 30 °C ; der pH-Wert bleibt nahezu unverändert. Man rührt anschließend noch etwa 15 Stunden nach und isoliert sodann die erfindungsgemäß hergestellten sauren Nitrofarbstoffe durch Sprühtrocknung.

Man erhält ein Farbstoffpulver, das Leder — auch frisches Chromleder — in einem vollen olivstichigen Braunton färbt.

Beispiel 10

Man verfährt gemäß der Verfahrensweise des Beispieles 9, setzt jedoch zur Herstellung von erfindungsgemäßen sauren Nitrofarbstoffen anstelle der im Beispiel 9 angegebenen Amino-nitrodiphenylamin-sulfonsäure 33,9 Teile 4'-Nitro-3-amino-4-methoxy-diphenylamin-2'-sulfonsäure als Ausgangsverbindung ein.

Der erhaltene Farbstoff hat ähnlich gute färberische Eigenschaften wie der des Beispieles 9. Er färbt Leder — ebenso auch frisches Chromleder — in einem vollen olivstichigen Braunton.

Beispiel 11

Zur Herstellung von sauren Nitrofarbstoffen verfährt man gemäß der Verfahrensweise des Beispieles 9, setzt jedoch anstelle der dort verwendeten Amino-nitrodiphenylamin-sulfonsäure 34,35 Teile 3-Chlor-4'-nitro-4-amino-diphenylamin-2'-sulfonsäure ein.

Nach Sprühtrocknung erhält man ein Farbstoffpulver, das ähnlich gute färberische Eigenschaften besitzt wie die nach Beispiel 9 erhaltenen sauren Nitrofarbstoffe ; es färbt Leder, wie auch frisches Chromleder, in einem leicht gelbstichigen Braunton.

Beispiel 12

Man verfährt gemäß der Verfahrensweise des Beispieles 9 zur Herstellung von erfindungsgemäßen sauren Nitrofarbstoffen, geht jedoch von 30,9 Teilen 2'-Nitro-4-amino-diphenylamin-4'-sulfonsäure als Ausgangsverbindung aus und verwendet anstelle des Nickelsulfats 0,5 Teile Kupfersulfat-pentahydrat.

Nach Sprühtrocknung erhält man ein Farbstoffpulver, das Leder — auch frisches Chromleder — in einem rotstichigen Braunton färbt.

Beispiel 13

Man verfährt gemäß der Verfahrensweise des Beispieles 9, setzt jedoch als Ausgangs-Aminonitrodiphenylaminsulfonsäure 4'-Nitro-4-amino-3-methyl-diphenylamin-2'-sulfonsäure in einer Menge von 32,3 Teilen und anstelle des Nickelsulfats 0,5 Teile Kupfersulfat-pentahydrat ein.

Das erhaltene Farbstoffpulver besitzt ähnlich gute färberische Eigenschaften und färbt Leder, auch frisches Chromleder, in einem gelbstichigen Braunton.

Beispiel 14

Man verfährt gemäß der Verfahrensweise des Beispieles 9, setzt jedoch als Ausgangs-Aminonitrodiphenylaminsulfonsäure 2'-Nitro-3-amino-diphenylamin-4-sulfonsäure in eine Menge von 30,9 Teilen und anstelle des Nickelsulfats 0,5 Teile Kupfersulfat-pentahydrat ein.

Das erhaltene Farbstoffpulver besitzt ähnlich gute färberische Eigenschaften und färbt Leder, auch frisches Chromleder, in einem gelben Braunton.

Beispiel 15

Man verfährt gemäß der Verfahrensweise des Beispieles 9, setzt jedoch als Ausgangs-Aminonitrodiphenylaminsulfonsäure 4'-Nitro-3-amino-diphenylamin-2'-sulfonsäure in eine Menge von 32,3 Teilen und anstelle des Nickelsulfats 0,5 Teile Kupfersulfat-pentahydrat ein.

Das erhaltene Farbstoffpulver besitzt ähnlich gute färberische Eigenschaften und färbt Leder, auch frisches Chromleder, in einem mittleren Braunton.

Beispiel 16

30,9 Teile 4'-Nitro-4-amino-diphenylamin-2'-sulfonsäure werden mit 160 Teilen Wasser verrührt ; diese wäßrige Suspension wird auf 60 °C erwärmt, und es werden 0,4 Teile Kobalt(III)-chlorid-hexahydrat zugegeben. Mit 10 Teilen einer 33 %igen wäßrigen Natronlauge wird ein pH-Wert von etwa 6 eingestellt. Man oxidiert sodann durch stetige Zugabe von 18 Teilen einer wäßrigen 35 %igen Wasserstoffperoxid-Lösung innerhalb von 2 Stunden. Die Reaktionstemperatur und der pH-Wert ändern sich nur wenig. Man rührt noch 2 Stunden bei 60 °C nach, kühlt sodann auf Raumtemperatur ab und salzt das Farbstoffprodukt durch Zugabe von etwa 45 Teilen Natriumchlorid aus. Es wird abgesaugt und bei 60 °C getrocknet.

Man erhält ein Farbstoffpulver, das gute färberische Eigenschaften aufweist und Leder — auch frisches Chromleder — in einem leicht olivstichigen Braunton färbt.

Anwendungsbeispiel 1

Zur Herstellung einer Färbung auf Boxcalf wird wie folgt verfahren : 10 Teile Kalbleder (Falzgewicht), das mit einem handelsüblichen Chromgerbstoff gegerbt wurde, wird in Faß in einem Bad aus 30 Teilen Wasser, 0,04 Teilen Natriumacetat und 0,04 Teilen Natriumhydrogencarbonat 30 Minuten lang bewegt und entsäuert. Sodann wird es in ein frisches Bad eingebracht, das aus 30 Teilen Wasser und 0,05 Teilen eines erfindungsgemäßen sauren Nitrofarbstoffes besteht, und darin 20 Minuten bewegt ; danach werden 0,2 Teile eines Öl-Lickergemisches, nach weiteren 30 Minuten 0,02 Teile 85 %ige wäßrige Ameisensäure zugegeben und das Leder darin weiter bewegt. Nach 30 Minuten wird das Leder herausgenommen, gespült, getrocknet und gestollt. — Die Temperatur der Bäder beträgt jeweils ca. 50 °C.

Anwendungsbeispiel 2

Zur Herstellung einer Färbung auf Spaltvelour arbeitet man wie folgt : 5 Teile trockenes geschliffenes Chromrindspaltleder werden zur Aufwalken 2 Stunden lang im Faß in einem Bad aus 50 Teilen Wasser, 0,05 Teile 25 %igem wäßrigem Ammoniak und 0,04 Teilen Tributylphenyl-nonaglykoläther bewegt. Sodann wird es in ein frisches Bad aus 40 Teilen Wasser, 0,04 Teilen 25 %igen wäßrigem Ammoniak und 0,125 Teilen eines erfindungsgemäßen Farbstoffes eingebracht und darin 90 Minuten lang bewegt. 0,1 Teile eines Lickers und nach 30 Minuten 0,125 Teile 85 %ige wäßrige Ameisensäure werden zugegeben, wobei das Leder weiterhin bewegt wird. Es wird nach 30 Minuten herausgenommen, gespült, getrocknet und gestollt. — Die Badtemperatur beträgt jeweils ca. 50 °C.

Anwendungsbeispiel 3

Zur Herstellung einer Färbung auf vegetabil gegerbtem nachchromiertem Bekleidungsvelourleder wird wie folgt gearbeitet : 5 Teile eines derartigen Leders aus ostindischen Bastarden werden zum Aufwalken 90 Minuten lang in einem Bad aus 50 Teilen Wasser, 0,05 Teilen 25 %igen wäßrigem Ammoniak und 0,05 Teilen eines Nonylphenolpolyglykoläthers (oder eines ähnlichen nichtionogenen Tensids) im Faß behandelt. Das Bad wird sodann abgelassen und durch ein neues ersetzt, das aus 40 Teilen Wasser und 0,25 Teilen eines erfindungsgemäßen Farbstoffes besteht. Das Leder wird darin 60 Minuten bewegt ; sodann werden dem Bad 0,125 Teile eines Lickers zugegeben und nach weiteren 30 Minuten 0,25 Teile 85 %ige wäßrige Ameisensäure nachgesetzt, wobei das Leder weiterhin bewegt wird. Nach 30 Minuten wird das Leder herausgenommen, gespült, getrocknet und gestollt. — Die Badtemperatur beträgt jeweils ca. 50 °C.

Nach allen Anwendungsbeispielen werden mit dem erfindungsgemäß(en) (erhältlichen) sauren Nitrofarbstoffen kräftige braune Färbungen mit guten Echtheiten erhalten.

**Patentansprüche**

1. Verfahren zur Herstellung von sauren Nitrofarbstoffen durch Behandlung einer oder mehrerer Amino-nitrodiphenylamin-sulfonsäuren mit einem Oxidationsmittel in wäßrigem Medium, dadurch gekennzeichnet, daß man als Oxidationsmittel Wasserstoffperoxid einsetzt und die Umsetzung bei einem pH-Wert von größer als 3 und einer Temperatur zwischen 0 und 100 °C durchführt.

2. Verfahren nach Anspruch 1, dadurch gekennzeichnet, daß man die Umsetzung in Gegenwart von Schwermetallionen durchführt.

3. Verfahren nach Anspruch 2, dadurch gekennzeichnet, daß man als schwermetallionen-abgebende Verbindung ein wasserlösliches Schwermetallsalz verwendet.

4. Verfahren nach Anspruch 3, dadurch gekennzeichnet, daß man als wasserlösliches Schwermetallsalz das Sulfat, Chlorid, Nitrat oder Acetat des Eisens, Kobalts, Nickels, Chroms, Kupfers, Zinks oder Mangans einsetzt.

5. Verfahren nach einem der Ansprüche 1 bis 4, dadurch gekennzeichnet, daß man die Umsetzung bei einem pH-Wert zwischen 4 und 12 durchführt.

6. Verfahren nach einem der Ansprüche 1 bis 4, dadurch gekennzeichnet, daß man die Umsetzung bei einem pH-Wert zwischen 6 und 9 durchführt.

7. Verfahren nach einem der Ansprüche 1 bis 6, dadurch gekennzeichnet, daß man die Umsetzung bei einer Temperatur zwischen 10 und 60 °C durchführt.

8. Verfahren nach Anspruch 1, 2, 5, 6 oder 7, dadurch gekennzeichnet, daß man das Wasserstoffperoxid in einer Menge von 0,2 bis 3,5 Mol pro Mol Amino-nitrodiphenylaminsulfonsäure einsetzt.

9. Verfahren nach Anspruch 1, 2, 5, 6, 7 oder 8, dadurch gekennzeichnet, daß die Ausgangs-Aminonitrodiphenylaminsulfonsäuren Verbindungen der allgemeinen Formel (1)

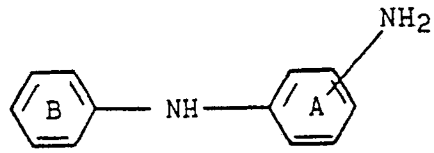

(1)

sind, in welcher die an den Benzolkern A gebundene primäre Aminogruppe in meta- oder para-Stellung zur sekundären Aminogruppe steht und der Benzolkern B durch eine oder zwei Nitrogruppen und eine Sulfogruppe substituiert ist, die in ortho- und para-Stellung zur sekundären Aminogruppe an den Kern B gebunden sind, und in welcher die Benzolkerne A und B noch jeweils zusätzlich durch einen oder zwei Substituenten substituiert sein können, die aus der Gruppe Halogen, Alkyl von 1 bis 4 C-Atomen, Alkoxy von 1 bis 4 C-Atomen und Carboxy ausgewählt sind.

10. Verfahren nach einem der Ansprüche 1 bis 8, dadurch gekennzeichnet, daß die Ausgangs-Aminonitrodiphenyl-aminsulfonsäure die 4-Amino-4'-nitro-diphenylamin-2'-sulfonsäure, 4-Amino-2'-nitro-diphenylamin-4'-sulfonsäure, 3-Amino-2'-nitro-diphenylamin-4'-sulfonsäure oder 3-Amino-4'-nitrodiphenylamin-2'-sulfonsäure oder ein Gemisch von solchen Verbindungen ist.

11. Verfahren nach einem der Ansprüche 1 bis 8, dadurch gekennzeichnet, daß die Ausgangs-Aminonitrodiphenylaminsulfonsäure eine 4-Amino-(nitrodiphenylamin)-sulfonsäure ist.

12. Saure Nitrofarbstoffe, erhalten nach einem Verfahren gemäß einem der Ansprüche 1 bis 11.

13. Verwendung der Farbstoffe von Anspruch 12 zum Färben von Leder.

14. Verwendung nach Anspruch 13, dadurch gekennzeichnet, daß das Leder ein frisches Chromleder ist.

15. Verfahren zum Färben von Leder, insbesondere frischem Chromleder, nach welchem man einen Farbstoff aus wäßrigem Medium auf das Leder aufbringt und das Leder nach üblichen Färbemethoden behandelt, dadurch gekennzeichnet, daß der Farbstoff ein Farbstoff von Anspruch 12 ist.

## Claims

1. A process for preparing acid nitro dyestuffs by treating one or more aminonitrodiphenylaminesulfonic acids with an oxidizing agent in an aqueous medium, which comprises using hydrogen peroxide as the oxidizing agent and carrying out the reaction at a pH of greater than 3 and a temperature between 0 and 100 °C.

2. The process as claimed in claim 1, wherein the reaction is carried out in the presence of heavy metal ions.

3. The process as claimed in claim 2, wherein the compound which is used to give off heavy metal ions is a water-soluble heavy metal salt.

4. The process as claimed in claim 3, wherein the water-soluble heavy metal salt used is the sulfate, chloride, nitrate or acetate of iron, cobalt, nickel, chromium, copper, zinc or manganese.

5. The process as claimed in any one of claims 1 to 4, wherein the reaction is carried out at a pH between 4 and 12.

6. The process as claimed in any one of claims 1 to 4, wherein the reaction is carried out at a pH between 6 and 9.

7. The process as claimed in any one of claims 1 to 6, wherein the reaction is carried out at a temperature between 10 and 60 °C.

8. The process as claimed in claim 1, 2, 5, 6 or 7, wherein the hydrogen peroxide is used in an amount of 0.2 to 3.5 mol per mol of aminonitrodiphenylaminesulfonic acid.

9. The process as claimed in claim 1, 2, 5, 6, 7 or 8, wherein the starting aminonitrodiphenylaminesulfonic acids are compounds of the formula (1).

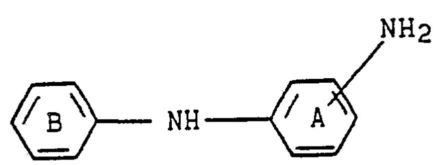

(1)

in which the primary amino group bonded to benzene nucleus A is in the meta- or para-position relative to the secondary amino group and benzene nucleus B is substituted by one or two nitrogen groups and a sulfo group which are bonded to said nucleus B in the ortho- and para- position relative to the secondary amino group, and said benzene nuclei A and B can each be additionally substituted by one or two substituents selected from the group consisting of halogen, alkyl of 1 to 4 carbon atoms, alkoxy of 1 to 4 carbon atoms and carboxyl.

10. The process as claimed in any one of claims 1 to 8, wherein the starting aminonitrodiphenylaminesulfonic acid is 4-amino-4'-nitrodiphenylamine-2'-sulfonic acid, 4-amino-2'-nitrodiphenylamine-4'-sulfonic acid, 3-amino-2'-nitrodiphenylamine-4'-sulfonic acid or 3-amino-4'-nitrodiphenylamine-2'-sulfonic acid or a mixture of these compounds.

11. The process as claimed in any one of claims 1 to 8, wherein the starting aminonitrodiphenylaminesulfonic acid is a 4-amino-(nitrodiphenylamine)-sulfonic acid.

12. Acid nitro dyestuffs obtained in a process as claimed in any one of claims 1 to 11.

13. Use of the dyestuffs of claim 12 for dyeing leather.

14. Use as claimed in claim 13, wherein the leather is a fresh chrome leather.

15. A process for dyeing leather, in particular fresh chrome leather, in which a dyestuff is applied to the leather from an aqueous medium and the leather is treated by conventional dyeing methods, wherein the dye-stuff is a dyestuff of claim 12.

**Revendications**

1. Procédé pour la préparation de colorants nitrés azotés, par traitement d'un ou plusieurs acides aminonitrodiphénylaminesulfoniques à l'aide d'un oxydant en milieu aqueux, caractérisé en ce qu'on utilise comme oxydant du peroxyde d'hydrogène et que la réaction est mise en œuvre à un pH supérieur à 3 et à une température comprise entre 0 et 100 °C.

2. Procédé selon la revendication 1, caractérisé en ce que la réaction est mise en œuvre en présence d'ions de métaux lourds.

3. Procédé selon la revendication 2, caractérisé en ce qu'on utilise comme composé cédant des métaux lourds un sel de métal lourd soluble dans l'eau.

4. Procédé selon la revendication 3, caractérisé en ce qu'on utilise comme sel de métal lourd soluble dans l'eau le sulfate, le chlorure, le nitrate ou l'acétate de fer, de cobalt, de nickel, de chrome, de cuivre, de zinc ou de manganèse.

5. Procédé selon l'une des revendications 1 à 4, caractérisé en ce que la réaction est mise en œuvre à un pH compris entre 4 et 12.

6. Procédé selon l'une des revendications 1 à 4, caractérisé en ce que la réaction est mise en œuvre à un pH compris entre 6 et 9.

7. Procédé selon l'une des revendications 1 à 6, caractérisé en ce que la réaction est mise en œuvre à une température comprise entre 10 et 60 °C.

8. Procédé selon la revendication 1, 2, 5, 6 ou 7, caractérisé en ce qu'on utilise le peroxyde d'hydrogène en une quantité de 0,2 à 3,5 moles par mole d'acide aminonitrodiphénylaminesulfonique.

9. Procédé selon la revendication 1, 2, 5, 6, 7 ou 8, caractérisé en ce que les acides aminonitrodiphénylaminesulfoniques de départ sont des composés de formule générale (1)

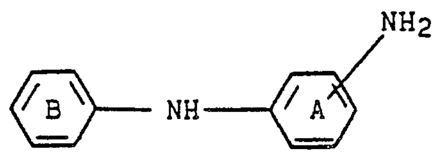

(1)

dans laquelle le groupe amino primaire fixé au noyau benzénique A se trouve en position méta ou para par rapport au groupe amino secondaire, et que le noyau benzénique B est substitué par un ou deux groupes nitro et un groupe sulfo, qui sont fixés au noyau B en position ortho et para par rapport au groupe amino secondaire, formule dans laquelle les noyaux benzéniques A et B peuvent encore être substitués par un ou deux substituants supplémentaires, choisis dans le groupe comprenant les halogènes, les radicaux alkyle ayant de 1 à 4 atomes de carbone, alcoxy ayant de 1 à 4 atomes de carbone et carboxy.

10. Procédé selon l'une des revendications 1 à 8, caractérisé en ce que l'acide aminonitrodiphénylaminesulfonique de départ est l'acide amino-4 nitro-4' diphénylaminesulfonique-2', l'acide amino-4 nitro-2' diphénylaminesulfonique-4', l'acide amino-3 nitro-2' diphénylaminesulfonique-4' ou l'acide amino-3 nitro-4' diphénylaminesulfonique-2' ou un mélange de ces composés.

11. Procédé selon l'une des revendications 1 à 8, caractérisé en ce que l'acide aminonitrodiphénylaminesulfonique de départ est un acide amino-4 nitrodiphénylaminesulfonique.

12. Colorants nitrés acides, obtenus par un procédé selon l'une des revendications 1 à 11.

13. Utilisation des colorants selon la revendication 12 pour la teinture du cuir.

14. Utilisation selon la revendication 13, caractérisée en ce que le cuir est un cuir au chrome frais.

15. Procédé pour la teinture du cuir, en particulier du cuir au chrome frais, selon lequel on applique un colorant sur le cuir en milieu aqueux, et qu'on traite le cuir par des procédés classiques de teinture, caractérisé en ce que le colorant est un colorant selon la revendication 12.